# EUROPÄISCHE PATENTSCHRIFT

(11) **EP 3 625 543 B1**
(45) Veröffentlichungstag und Bekanntmachung des Hinweises auf die Patenterteilung: **07.06.2023**
(21) Anmeldenummer: 18721998.5
(22) Anmeldetag: 26.04.2018
(51) Int. Cl.: G01N 15/06, F02D 41/14, F02D 41/22, G01N 15/00

(54) **RESISTIVER PARTIKELSENSOR UND PARTIKELSENSORSYSTEM**
RESISTIVE PARTICLE SENSOR AND PARTICLE SENSOR SYSTEM
CAPTEUR DE PARTICULES RÉSISTIF ET SYSTÈME DE CAPTEUR DE PARTICULES

(30) Priorität: 19.05.2017 DE 102017208552
(43) Veröffentlichungstag der Anmeldung: 25.03.2020
(73) Patentinhaber: Robert Bosch GmbH, 70442 Stuttgart (DE)
(72) Erfinder: KLENK, Mathias, 74369 Loechgau (DE); HERWEG, Karola, 70469 Stuttgart (DE); BAARS, Enno, 71229 Leonberg (DE); SCHILLING, Carolin Maria, 76669 Bad Schoenborn (DE)
(86) Internationale Anmeldenummer: PCT/EP2018/060710
(87) Internationale Veröffentlichungsnummer: WO 2018/210546

(56) Entgegenhaltungen:
- DE-A1- 10 133 384
- DE-A1-102013 110 291
- DE-A1-102013 215 123
- JP-A- 2012 108 093
- US-B2- 8 860 439

## Beschreibung

### Stand der Technik

Aus der US-20120119759 A1 ist bereits ein resistiver Partikelsensor zum Nachweis von Ruß im Abgas einer Brennkraftmaschine, mit einem Sensorelement mit zwei in einem einem Abgas aussetzbaren Bereich des Sensorelements beabstandet zueinander verlaufenden Leiterbahnen zum resistiven Nachweis einer Partikelmenge bekannt.

Dabei wird eine Partikelmenge mittels einer elektrischen Leitfähigkeit zwischen den Leiterbahnen sensiert.

Um die Abwesenheit von Ruß im Abgas von einer mangelnden Integrität des Partikelsensors unterscheiden zu können, wird gemäß dem Stand der Technik ein Widerstand vorgesehen, der die Leiterbahnen miteinander verbindet.

Nachteilig an dieser Anordnung ist, dass im Fall einer zwischen den Leiterbahnen vorliegenden Partikelmenge und einer daraus resultierenden leitenden Verbindung zwischen den Leiterbahnen die Feststellung der Integrität des Partikelsensors nicht mehr eindeutig möglich ist.

Aus der US 8,860,439 B2 ist ebenfalls ein resistiver Partikelsensor zum Nachweis von Ruß im Abgas einer Brennkraftmaschine, mit einem Sensorelement mit zwei in einem einem Abgas aussetzbaren Bereich des Sensorelements beabstandet zueinander verlaufenden Leiterbahnen zum resistiven Nachweis einer Partikelmenge bekannt. Die Leiterbahnen sind jeweils mit "plate conductors" verbunden und verlaufen in dem dem Abgas aussetzbaren Bereich des Sensorelements in einer geraden Linie beabstandet zueinander. Ein Wechselwirkungsbereich zwischen den Leiterbahnen ist daher vergleichsweise kurz. Die Sensitivität des Partikelsensors ist entsprechend gering.

Ein weiterer resistiver Partikelsensor ist aus der DE 101 33 384 A1 bekannt und weist kammförmige Leiterbahnen zum resistiven Nachweis einer Partikelmenge sowie einen in das Sensorelement integrierten mit den kammförmigen Leiterbahnen elektrisch verbundenen Plattenkondensator auf.

Aus der DE 10 2013 215 123 A1 ist ein Detektionssensor für partikuläre Materie bekannt, wobei der Detektionssensor ein Detektionselektrodenpaar und einen Leitungsfehlerdetektionsabschnitt umfasst, und der Leitungsfehlerdetektionsabschnitt einen Widerstandswert eines leitfähigen Pfads von einem ersten Anschluss zu einem zweiten Anschluss jeder der Detektionselektroden detektiert, und das Auftreten eines Leitungsfehlers in jeder der Detektionselektroden auf der Grundlage des detektierten Widerstandswerts detektiert.

### Offenbarung der Erfindung

Der erfindungsgemäße Partikelsensor weist Leiterbahnen auf, die über eine Kapazität miteinander verbunden sind. Auf diese Weise ist die Integrität des Partikelsensors feststellbar.

Erfindungsgemäß ist vorgesehen, dass die Leiterbahnen in dem sensitiven Bereich in Mäandern parallel zueinander verlaufen. Unter Leiterbahnen sind im Rahmen dieser Anmeldung insbesondere metallische Strukturen zu verstehen, die insbesondere lokal eine Längserstreckung und zu dieser und untereinander senkrecht eine Quererstreckung und eine Hocherstreckung aufweisen, wobei die Längserstreckung insbesondere wesentlich größer ist als die Quererstreckung und die Hocherstreckung. Unter Leiterbahnen oder Leiterbahnabschnitten, die parallel zueinander verlaufen, sind im Rahmen dieser Anmeldung insbesondere Leiterbahnen oder Leiterbahnabschnitte zu verstehen, deren Längserstreckung lokal in die gleiche Richtung weist.

Unter Leiterbahnen, die in Mäandern verlaufen, sind im Rahmen dieser Anmeldung insbesondere Leiterbahnen zu verstehen, die mindestens zwei, bevorzugt mindestens drei oder mindestens vier, insbesondere parallel oder im Wesentlichen parallel zueinander verlaufende, Leiterbahnabschnitte aufweisen, wobei insbesondere zwischen benachbarten Leiterbahnabschnitten insbesondere Kehren der Leiterbahnen angeordnet sind, die insbesondere Kurven mit einem Winkel von 150° bis 210° sind. Unter einer Kapazität ist erfindungsgemäß eine Struktur aus zwei voneinander isolierten elektrischen Leitern zu verstehen, die von den oben erläuterten Leiterbahnen verschieden sind, und derart ausgebildet und voneinander beabstandet sind, dass sie bei einer Potentialdifferenz von einem Volt die Ladungsmenge 50-800 pC (Picocoulomb) zu speichern vermögen. Mit anderen Worten: Der Wert der Kapazität beträgt erfindungsgemäß 50 - 800 pF (Pikofarad).

Unter Kontaktfläche zur Kontaktierung des Sensorelements sind im Rahmen dieser Anmeldung insbesondere Bereiche, beispielsweise Endbereiche, von Leiterbahnen zu verstehen in denen eine Quererstreckung der Leiterbahn insbesondere vergrößert ist. Unter einem Kondensator ist im Rahmen dieser Anmeldung insbesondere ein elektronisches Bauteil zu versehen, dass insbesondere zumindest grundsätzlich separat, insbesondere getrennt von dem Sensorelement handhabbar ist. Efindungsgemäß ist vorgesehen, dass die Leiterbahnen verzweigungsfreie Leiterbahnen sind, die jeweils von einer außerhalb des dem Abgas aussetzbaren Bereichs angeordneten Kontaktfläche zur Kontaktierung des Sensorelements ausgehen, von der Kontaktfläche zu dem dem Abgas aussetzbaren Bereich des Sensorelements führen, dort in Mäandern verlaufen und nachfolgend wieder aus dem dem Abgas aussetzbaren Bereich heraus zu einer weiteren Kontaktfläche zur Kontaktierung des Sensorelements führen und die Leiterbahnen über die beiden weiteren Kontaktflächen über die Kapazität miteinander verbunden sind. Erfindungsgemäß ist die Kapazität ein Kondensator, der in einem Gehäuse des Partikelsensors separat von dem Sensorelement, in einem mit dem Partikelsensor verbundenen Kabel, in einer mit dem Partikelsensor verbundenen Steckverbindung oder in einem mit dem Partikelsensor verbundenen Steuergerät angeordnet ist.

### Kurze Beschreibung der Zeichnung

Figur 1 zeigt eine Übersicht über einen erfindungsgemäßen Partikelsensor.
Figur 2 zeigt das Sensorelement eines erfindungsgemäßen Partikelsensors.
Die Figuren 3a, 3b, 3c und 3d zeigen verschiedene Ausführungsformen der Erfindung Ausführungsformen

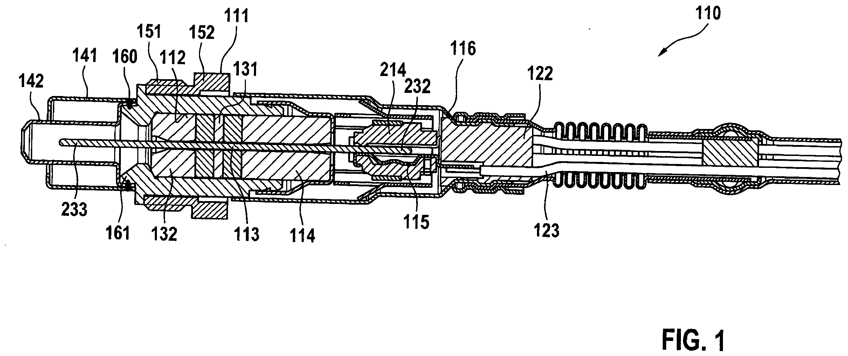

Figur 1 zeigt eine Übersicht über einen erfindungsgemäßen Partikelsensor 110 im Querschnitt entlang der Längsachse des Partikelsensors 110. Dieser Partikelsensor 110 weist ein metallisches Gehäuse 111 mit einer Durchgangsbohrung 112 auf, in der ein keramisches Sensorelement 113 durch eine Dichtpackung 131 sowie eine abgasseitige Isolationshülse 132 und eine kontaktseitigen Isolationshülse 114 festgelegt ist. Auf einen kontaktseitigen Endbereich des Sensorelements 232 sind beispielsweise 4 bis 6 Kontaktfedern 115 aufgeschoben, die wiederum in einem Kontakthalter 214 gehalten sind. Auf ihrer dem Abgas abgewandten Seite ist die Schutzhülse 116 durch eine Dichttülle 122 verschlossen, durch die mit den Kontaktfedern 115 elektrisch verbundene isolierte Leiter 123 hindurchgeführt sind.

Auf der dem Abgas zugewandten Seite des metallischen Gehäuses 111 sind zwei koaxiale Schutzrohre 141, 142 mittels einer gemeinsamen umlaufenden Schweißnaht 160 an einem abgasseitigen Kragen 161 des Gehäuses 111 fixiert. Die Schutzrohre 141, 142 weisen Öffnungen auf und decken einen abgasseitigen Endbereich des Sensorelements 233 ab. Dieser abgasseitige Endbereich des Sensorelements 233 ist somit ein dem Abgas aussetzbarer Bereich des Sensorelements 113. Der kontaktseitige Endbereich des Sensorelements 232 ist hingegen ein im Sinne der Erfindung nicht dem Abgas aussetzbarer Bereich.

Zur Montage in einem Abgassystem weist der Partikelsensor 110 ein Außengewinde 151 und ein Außensechskantprofil 152 auf.

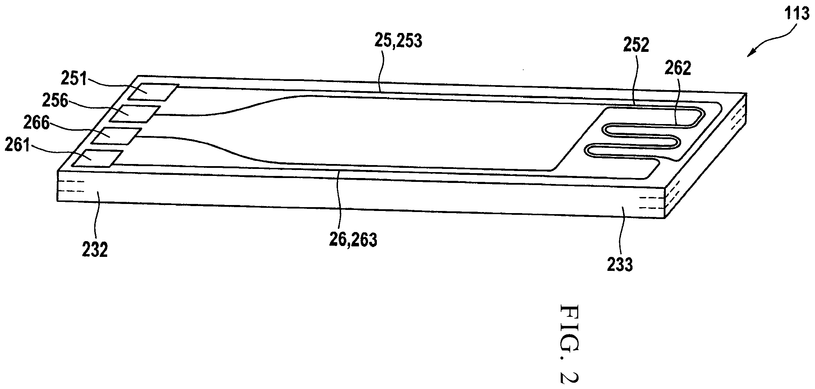

Figur 2 zeigt das Sensorelement 113 eines erfindungsgemäßen Partikelsensors 110.

Das Sensorelement 113 ist als elektrisch isolierende Keramik ausgebildet und weist auf seiner Oberfläche zwei in seinem abgasseitigen Endbereich 233 in Mäandern 252, 262 parallel und beabstandet zueinander verlaufende Leiterbahnen 25, 26 auf.

Genauer sind die beiden Leiterbahnen 25, 26 jeweils verzweigungsfrei ausgeführt und erstrecken sich jeweils ausgehend von einer im kontaktseitigen Endbereich des Sensorelements 232 angeordneten Kontaktfläche 251, 261, die der Kontaktierung des Sensorelements 113 dient, und von der Kontaktfläche 251, 261 jeweils zu dem abgasseitigen Endbereich 233 des Sensorelements.

Dort verlaufen die Leiterbahnen 25, 26 jeweils in Mäandern 252, 262 parallel und beabstandet zueinander, bevor sie nachfolgend jeweils in einem Zuleitungsabschnitt 253, 263 jeweils zu einer weiteren Kontaktfläche 256, 266 zur Kontaktierung des Sensorelements 113 führen, die außerhalb des dem Abgas aussetzbaren Bereichs angeordnet sind.

Das Sensorelement 113 weist ferner in seinem Inneren und auf seiner Rückseite, in der Figur 2 nicht dargestellt, Leiterbahnstrukturen zu seiner Beheizung und Temperaturkontrolle auf.

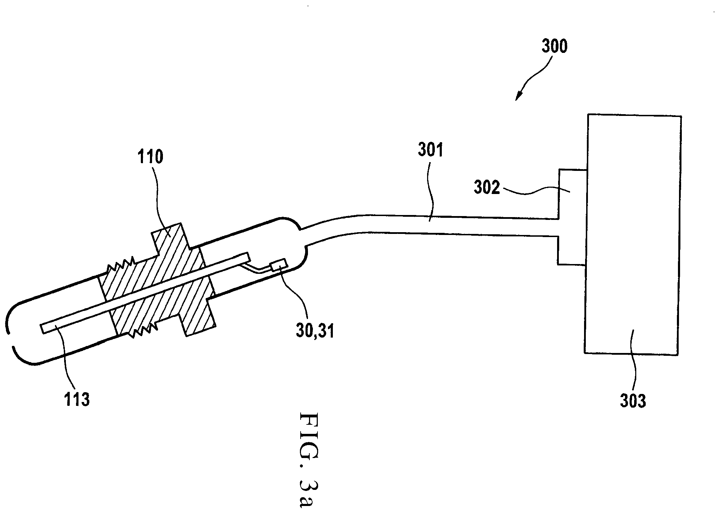

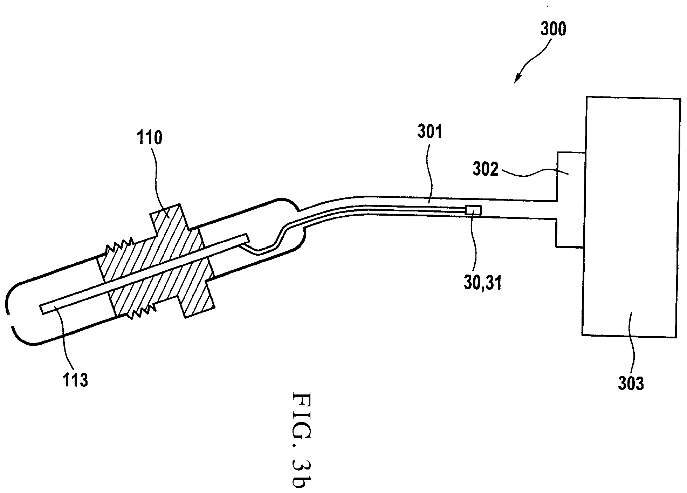

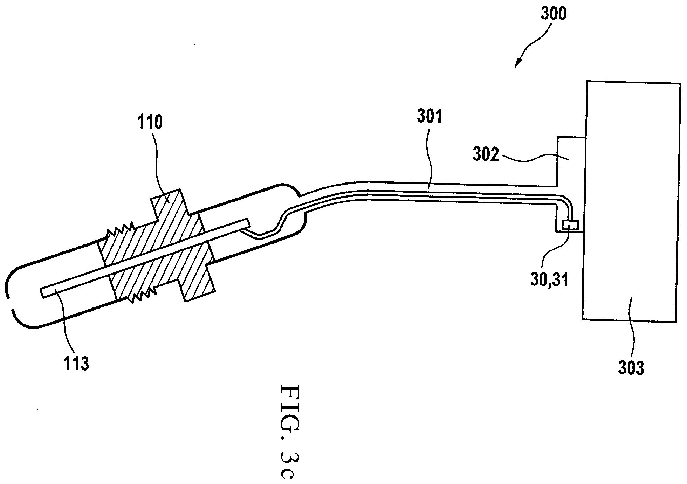

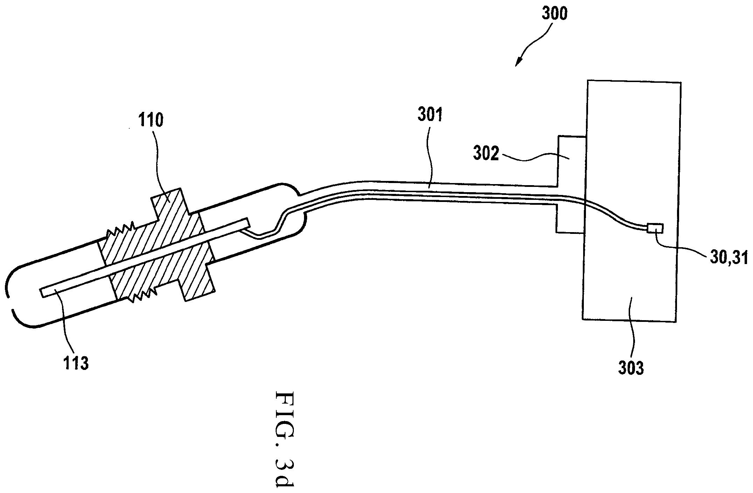

Die Figuren 3a, 3b, 3c und 3d zeigen schematisch Gesamtansichten eines Partikelsensorssystems 300, das jeweils aus einem Partikelsensor 110 besteht, der grundsätzlich wie in der Figur 1 gezeigt aufgebaut ist und in den das in der Figur 2 gezeigte Sensorelement 113 integriert ist. Mit dem Partikelsensor 110 ist über ein Kabel 301 und eine Steckverbindung 302 ein Steuergerät 303, beispielsweise ein Motorsteuergerät der Brennkraftmaschine, elektrisch verbunden.

Über die weiteren Kontaktflächen 256, 266 des Sensorelements 113 (siehe Figur 2) und entsprechende Kontaktfedern 115 (siehe Figur 1) sind die Leiterbahnen 25, 26 (siehe Figur 2) mit einer als Kondensator 31 ausgebildeten Kapazität 30 elektrisch verbunden, deren Wert im Beispiel 300pF (Pikofarad) beträgt.

Der Kondensator 31 kann beispielsweise in einem Gehäuse 111 des Partikelsensors 113 oder in einer an dem Gehäuse 111 fixierten Schutzhülse 116 des Partikelsensors 110 angeordnet sein (siehe Figur 3a) oder in dem Kabel 301 (siehe Figur 3b) oder in der Steckverbindung 302 (siehe Figur 3c) oder in dem Steuergerät 303 (siehe Figur 3d) angeordnet sein.

## Patentansprüche

1. Resistiver Partikelsensor (110) zum Nachweis von Ruß im Abgas einer Brennkraftmaschine, mit einem Sensorelement (113) mit zwei in einem dem Abgas aussetzbaren Bereich des Sensorelements (113) beabstandet zueinander verlaufenden Leiterbahnen (25, 26) zum resistiven Nachweis einer Partikelmenge, wobei die Leiterbahnen (25, 26) über eine Kapazität (30, 31) miteinander verbunden sind und wobei die Leiterbahnen (25, 26) in dem dem Abgas aussetzbaren Bereich des Sensorelements (113) in Mäandern (252, 262) parallel zueinander verlaufen, wobei die Leiterbahnen (25, 26) verzweigungsfreie Leiterbahnen (25, 26) sind, die jeweils von einer außerhalb des dem Abgas aussetzbaren Bereichs angeordneten Kontaktfläche (251, 261) zur Kontaktierung des Sensorelements (113) ausgehen, von der Kontaktfläche (251, 261) zu dem dem Abgas aussetzbaren Bereich des Sensorelements (113) führen, dort in Mäandern (252, 262) verlaufen und nachfolgend wieder aus dem dem Abgas aussetzbaren Bereich heraus zu einer weiteren Kontaktfläche (256, 266) zur Kontaktierung des Sensorelements (113) führen und die Leiterbahnen (25, 26) über die beiden weiteren Kontaktflächen (256, 266) über die Kapazität (30, 31) miteinander verbunden sind und wobei der Wert der Kapazität (30, 31) 50 - 800 pF (Pikofarad) beträgt und wobei
die Kapazität (30, 31) ein Kondensator (31) ist, der in einem Gehäuse des Partikelsensors (110), separat von dem Sensorelement (113) angeordnet ist.

2. Partikelsensorsystem (300), umfassend einen resistiven Partikelsensor (110) zum Nachweis von Ruß im Abgas einer Brennkraftmaschine, mit einem Sensorelement (113) mit zwei in einem dem Abgas aussetzbaren Bereich des Sensorelements (113) beabstandet zueinander verlaufenden Leiterbahnen (25, 26) zum resistiven Nachweis einer Partikelmenge, wobei die Leiterbahnen (25, 26) über eine Kapazität (30, 31) miteinander verbunden sind und wobei die Leiterbahnen (25, 26) in dem dem Abgas aussetzbaren Bereich des Sensorelements (113) in Mäandern (252, 262) parallel zueinander verlaufen, wobei die Leiterbahnen (25, 26) verzweigungsfreie Leiterbahnen (25, 26) sind, die jeweils von einer außerhalb des dem Abgas aussetzbaren Bereichs angeordneten Kontaktfläche (251, 261) zur Kontaktierung des Sensorelements (113) ausgehen, von der Kontaktfläche (251, 261) zu dem dem Abgas aussetzbaren Bereich des Sensorelements (113) führen, dort in Mäandern (252, 262) verlaufen und nachfolgend wieder aus dem dem Abgas aussetzbaren Bereich heraus zu einer weiteren Kontaktfläche (256, 266) zur Kontaktierung des Sensorelements (113) führen und die Leiterbahnen (25, 26) über die beiden weiteren Kontaktflächen (256, 266) über die Kapazität (30, 31) miteinander verbunden sind und wobei der Wert der Kapazität (30, 31) 50 - 800 pF (Pikofarad) beträgt;
und umfassend ein Kabel (301) und eine Steckverbindung (302), wobei der resistive Partikelsensor über das Kabel (301) und die Steckverbindung (302) elektrisch mit einem Steuergerät (303) verbindbar ist und die Kapazität (30, 31) ein Kondensator (31) ist, der in dem Kabel (301) oder in der Steckverbindung (302) angeordnet ist.

3. Partikelsensorsystem (300), umfassend einen resistiven Partikelsensor (110) zum Nachweis von Ruß im Abgas einer Brennkraftmaschine, mit einem Sensorelement (113) mit zwei in einem dem Abgas aussetzbaren Bereich des Sensorelements (113) beabstandet zueinander verlaufenden Leiterbahnen (25, 26) zum resistiven Nachweis einer Partikelmenge, wobei die Leiterbahnen (25, 26) über eine Kapazität (30, 31) miteinander verbunden sind und wobei die Leiterbahnen (25, 26) in dem dem Abgas aussetzbaren Bereich des Sensorelements (113) in Mäandern (252, 262) parallel zueinander verlaufen, wobei die Leiterbahnen (25, 26) verzweigungsfreie Leiterbahnen (25, 26) sind, die jeweils von einer außerhalb des dem Abgas aussetzbaren Bereichs angeordneten Kontaktfläche (251, 261) zur Kontaktierung des Sensorelements (113) ausgehen, von der Kontaktfläche (251, 261) zu dem dem Abgas aussetzbaren Bereich des Sensorelements (113) führen, dort in Mäandern (252, 262) verlaufen und nachfolgend wieder aus dem dem Abgas aussetzbaren Bereich heraus zu einer weiteren Kontaktfläche (256, 266) zur Kontaktierung des Sensorelements (113) führen und die Leiterbahnen (25, 26) über die beiden weiteren Kontaktflächen (256, 266) über die Kapazität (30, 31) miteinander verbunden sind und wobei der Wert der Kapazität (30, 31) 50 - 800 pF (Pikofarad) beträgt; und umfassend ein Kabel (301), eine Steckverbindung (302) und ein mit dem Partikelsensor (110) über das Kabel (301) und die Steckverbindung (302) elektrisch verbundenes Steuergerät (303), wobei die Kapazität (30, 31) ein Kondensator (31) ist, der in dem Steuergerät (303) angeordnet ist.

## Claims

1. Resistive particle sensor (110) for detecting soot in the exhaust gas of an internal combustion engine, comprising a sensor element (113) with two conductor tracks (25, 26), running at a distance from one another in a region of the sensor element (113) that can be exposed to the exhaust gas, for resistively detecting a quantity of particles, the conductor tracks (25, 26) being connected to one another via a capacitance (30, 31) and the conductor tracks (25, 26) running parallel to one another in meanders (252, 262) in the region of the sensor element (113) that can be exposed to the exhaust gas, the conductor tracks (25, 26) being branch-free conductor tracks (25, 26) which each start from a contact area (251, 261), which is arranged outside the region that can be exposed to the exhaust gas, for making contact with the sensor element (113), lead from the contact area (251, 261) to the region of the sensor element (113) that can be exposed to the exhaust gas, run in meanders (252, 262) there and subsequently again lead out of the region that can be exposed to the exhaust gas to a further contact area (256, 266) for making contact with the sensor element (113), and the conductor tracks (25, 26) being connected to one another by means of the two further contact areas (256, 266) via the capacitance (30, 31) and the value of the capacitance (30, 31) being 50-800 pF (picofarads) and the capacitance (30, 31) being a capacitor (31) which is arranged in a housing of the particle sensor (110), separately from the sensor element (113) .

2. Particle sensor system (300), comprising a resistive particle sensor (110) for detecting soot in the exhaust gas of an internal combustion engine, comprising a sensor element (113) with two conductor tracks (25, 26), running at a distance from one another in a region of the sensor element (113) that can be exposed to the exhaust gas, for resistively detecting a quantity of particles, the conductor tracks (25, 26) being connected to one another via a capacitance (30, 31) and the conductor tracks (25, 26) running parallel to one another in meanders (252, 262) in the region of the sensor element (113) that can be exposed to the exhaust gas, the conductor tracks (25, 26) being branch-free conductor tracks (25, 26) which each start from a contact area (251, 261), which is arranged outside the region that can be exposed to the exhaust gas, for making contact with the sensor element (113), lead from the contact area (251, 261) to the region of the sensor element (113) that can be exposed to the exhaust gas, run in meanders (252, 262) there and subsequently again lead out of the region that can be exposed to the exhaust gas to a further contact area (256, 266) for making contact with the sensor element (113), and the conductor tracks (25, 26) being connected to one another by means of the two further contact areas (256, 266) via the capacitance (30, 31) and the value of the capacitance (30, 31) being 50-800 pF (picofarads); and comprising a cable (301) and a plug-in connection (302), the resistive particle sensor being electrically connectable to a control device (303) via the cable (301) and the plug-in connection (302) and the capacitance (30, 31) being a capacitor (31) which is arranged in the cable (301) or in the plug-in connection (302).

3. Particle sensor system (300), comprising a resistive particle sensor (110) for detecting soot in the exhaust gas of an internal combustion engine, comprising a sensor element (113) with two conductor tracks (25, 26), running at a distance from one another in a region of the sensor element (113) that can be exposed to the exhaust gas, for resistively detecting a quantity of particles, the conductor tracks (25, 26) being connected to one another via a capacitance (30, 31) and the conductor tracks (25, 26) running parallel to one another in meanders (252, 262) in the region of the sensor element (113) that can be exposed to the exhaust gas, the conductor tracks (25, 26) being branch-free conductor tracks (25, 26) which each start from a contact area (251, 261), which is arranged outside the region that can be exposed to the exhaust gas, for making contact with the sensor element (113), lead from the contact area (251, 261) to the region of the sensor element (113) that can be exposed to the exhaust gas, run in meanders (252, 262) there and subsequently again lead out of the region that can be exposed to the exhaust gas to a further contact area (256, 266) for making contact with the sensor element (113), and the conductor tracks (25, 26) being connected to one another by means of the two further contact areas (256, 266) via the capacitance (30, 31) and the value of the capacitance (30, 31) being 50-800 pF (picofarads); and comprising a cable (301), a plug-in connection (302) and a control device (303) which is electrically connected to the particle sensor (110) via the cable (301) and the plug-in connection (302), the capacitance (30, 31) being a capacitor (31) which is arranged in the control device (303).

## Revendications

1. Détecteur de particules (110) résistif destiné à déceler de la suie dans les gaz d'échappement d'un moteur à combustion interne, comprenant un élément capteur (113) doté de deux pistes conductrices (25, 26), qui suivent un tracé en étant espacées l'une de l'autre dans une zone de l'élément capteur (113) qui peut être exposée aux gaz d'échappement en vue du décèlement résistif d'une quantité de particules, les pistes conductrices (25, 26) étant reliées l'une à l'autre par le biais d'une capacité (30, 31) et les pistes conductrices (25, 26) suivant un tracé en étant parallèles l'une à l'autre en méandres (252, 262) dans la zone de l'élément capteur (113) qui peut être exposée aux gaz d'échappement, les pistes conductrices (25, 26) étant des pistes conductrices (25, 26) sans bifurcation qui partent respectivement d'une zone de contact (251, 261) disposée à l'extérieur de la zone qui peut être exposée aux gaz d'échappement et destinée à établir le contact avec l'élément capteur (113), menant de la zone de contact (251, 261) à la zone de l'élément capteur (113) qui peut être exposée aux gaz d'échappement, y suivant un tracé en méandres (252, 262) et, ensuite, ressortant de nouveau de la zone qui peut être exposée aux gaz d'échappement et menant à une autre zone de contact (256, 266) destinée à établir le contact avec l'élément capteur (113) et les pistes conductrices (25, 26) étant reliées l'une à l'autre par le biais des deux autres zones de contact (256, 266) par le biais de la capacité (30, 31) et la valeur de la capacité (30, 31) étant de 50 à 800 pF (picofarads) et la capacité (30, 31) étant un condensateur (31) qui est disposé dans un boîtier du détecteur de particules (110), séparément de l'élément capteur (113).

2. Système de détection de particules (300), comprenant un détecteur de particules (110) résistif destiné à déceler de la suie dans les gaz d'échappement d'un moteur à combustion interne, comprenant un élément capteur (113) doté de deux pistes conductrices (25, 26), qui suivent un tracé en étant espacées l'une de l'autre dans une zone de l'élément capteur (113) qui peut être exposée aux gaz d'échappement en vue du décèlement résistif d'une quantité de particules, les pistes conductrices (25, 26) étant reliées l'une à l'autre par le biais d'une capacité (30, 31) et les pistes conductrices (25, 26) suivant un tracé parallèles l'une à l'autre en méandres (252, 262) dans la zone de l'élément capteur (113) qui peut être exposée aux gaz d'échappement, les pistes conductrices (25, 26) étant des pistes conductrices (25, 26) sans bifurcation qui partent respectivement d'une zone de contact (251, 261) disposée à l'extérieur de la zone qui peut être exposée aux gaz d'échappement et destinée à établir le contact avec l'élément capteur (113), menant de la zone de contact (251, 261) à la zone de l'élément capteur (113) qui peut être exposée aux gaz d'échappement, y suivant un tracé en méandres (252, 262) et, ensuite, ressortant de nouveau de la zone qui peut être exposée aux gaz d'échappement et menant à une autre zone de contact (256, 266) destinée à établir le contact avec l'élément capteur (113) et les pistes conductrices (25, 26) étant reliées l'une à l'autre par le biais des deux autres zones de contact (256, 266) par le biais de la capacité (30, 31) et la valeur de la capacité (30, 31) étant de 50 à 800 pF (picofarads) ;
et comprenant un câble (301) et une connexion à enfichage (302), le détecteur de particules résistif pouvant être relié électriquement à un contrôleur (303) par le biais du câble (301) et de la connexion à enfichage (302) et la capacité (30, 31) étant un condensateur (31) qui est disposé dans le câble (301) ou dans la connexion à enfichage (302).

3. Système de détection de particules (300), comprenant un détecteur de particules (110) résistif destiné à déceler de la suie dans les gaz d'échappement d'un moteur à combustion interne, comprenant un élément capteur (113) doté de deux pistes conductrices (25, 26), qui suivent un tracé en étant espacées l'une de l'autre dans une zone de l'élément capteur (113) qui peut être exposée aux gaz d'échappement en vue du décèlement résistif d'une quantité de particules, les pistes conductrices (25, 26) étant reliées l'une à l'autre par le biais d'une capacité (30, 31) et les pistes conductrices (25, 26) suivant un tracé parallèles l'une à l'autre en méandres (252, 262) dans la zone de l'élément capteur (113) qui peut être exposée aux gaz d'échappement, les pistes conductrices (25, 26) étant des pistes conductrices (25, 26) sans bifurcation qui partent respectivement d'une zone de contact (251, 261) disposée à l'extérieur de la zone qui peut être exposée aux gaz d'échappement et destinée à établir le contact avec l'élément capteur (113), menant de la zone de contact (251, 261) à la zone de l'élément capteur (113) qui peut être exposée aux gaz d'échappement, y suivant un tracé en méandres (252, 262) et, ensuite, ressortant de nouveau de la zone qui peut être exposée aux gaz d'échappement et menant à une autre zone de contact (256, 266) destinée à établir le contact avec l'élément capteur (113) et les pistes conductrices (25, 26) étant reliées l'une à l'autre par le biais des deux autres zones de contact (256, 266) par le biais de la capacité (30, 31) et la valeur de la capacité (30, 31) étant de 50 à 800 pF (picofarads) ; et comprenant un câble (301), une connexion à enfichage (302) et un contrôleur (303) relié électriquement au détecteur de particules (110) par le biais du câble (301) et de la connexion à enfichage (302), la capacité (30, 31) étant un condensateur (31) qui est disposé dans le contrôleur (303) .
